# EUROPEAN PATENT APPLICATION

(11) **EP 1 336 822 A2**
(43) Date of publication of application: **20.08.2003**
(21) Application number: 03250882.2
(22) Date of filing: 13.02.2003
(51) Int. Cl.: G01F 11/02, G01F 11/32, G01F 11/38

(54) **Improvements in or relating to valves for dispensers**

(30) Priority: 15.02.2002 GB 0203657
(71) Applicant: BESPAK PLC, King's Lynn Norfolk PE30 2JJ (GB)
(72) Inventor: Eames, Christopher John, Buckinghamshire MK5 7HG (GB); Nash, Martin Alan, Cambridgeshire PE13 3BA (GB)
(74) Representative: Alexander, Thomas Bruce

(57) **Abstract**

The present invention relates to a metering valve comprising a valve stem co-axially slidable within a chamber body, said chamber body and said valve stem defining a metering chamber, an outer and an inner annular seal being provided operative between a respective outer end and an inner end of the chamber body and the valve stem to seal the annular metering chamber there between, wherein the inner seal comprises a wiper element.

## Description

The invention relates to improvements in valves for dispensers for dispensing an accurately metered dose of a product.

Metering valves typically comprise a valve stem co-axially slidable within a chamber body. The chamber body and the valve stem define a metering chamber for metering, in use, the product to be dispensed on each actuation of the apparatus. Outer and an inner annular seals are provided operative between a respective outer end and an inner end of the chamber body and the valve stem to seal the annular metering chamber there between. One problem with such metering valves is that in order for a good seal to be obtained between the seals and the valve stem it is necessary for the seals to tightly engage the valve stem. This can lead to a problem known as 'seat drag' wherein on operation of the valve stem the seals are displaced axially du to the resulting friction. Over time seat drag can distort the shape of the seals leading to a reduction in integrity of the seal with the valve stem and also to potential changes in the volume of the metering chamber. A further problem is that the valve stem can be prone to sticking to the seals requiring a high actuation force to start the valve stem moving. The 'unstick' force required to move the valve stem can be variable between actuations. This can lead to inconsistency in operation of the apparatus, especially where the actuation is designed to be automatic or semi-automatic such as in a breath actuated device.

According to the invention there is provided a metering valve comprising a valve stem co-axially slidable within a chamber body, said chamber body and said valve stem defining a metering chamber, an outer and an inner annular seal being provided operative between a respective outer end and an inner end of the chamber body and the valve stem to seal the annular metering chamber there between, wherein the inner seal comprises a wiper element.

Preferably, the wiper element is directed away from the outer seal.

Preferably, the inner seal is formed from a thermoplastic elastomer.

The metering valve may further comprises a valve body, wherein the inner seal is located between the valve body and the chamber body. Preferably, the inner seal is formed as a co-moulding with the valve body.

Preferably, the wiper element comprises a wiper portion and a body portion, wherein an undersurface of the body portion is fully supported by the valve body.

The present invention also provides a dispensing apparatus comprising a metering valve as described above.

The present invention also provides a metering valve comprising a valve stem having at one end a piston extending within and slidable relative to a cup shaped chamber body, a clearance being provided between an outer surface of the piston and an inner surface of the chamber body to provide a path for product, a spring urging the piston against a base of the chamber body, movement of the valve stem against the spring bias causing the piston to move away from the base of the chamber body to define a temporary metering chamber between the valve stem and chamber body, the metering valve further comprising sealing means provided such that as an end of the piston moves into contact with the sealing means the flow of product along the path is prevented and the product dispensed through an outlet in the valve stem, wherein the sealing means comprises a wiper element.

Preferably, the wiper element is directed away from the base of the chamber body. Preferably, the sealing means is formed from a thermoplastic elastomer.

The metering valve may further comprises a valve body, wherein the sealing means is located between the valve body and the chamber body.

Preferably, the sealing means is formed as a co-moulding with the valve body.

Preferably, the wiper element comprises a wiper portion and a body portion, wherein an undersurface of the body portion is fully supported by the valve body.

The present invention also provides a dispensing apparatus comprising a metering valve as described above.

The present invention also provides a method of pressure filling a dispensing apparatus of the type comprising a metering valve closing off a dispensing container, the metering valve comprising a valve stem co-axially slidable within a chamber body, said chamber body and said valve stem defining a metering chamber, an outer and an inner annular seal being provided operative between a respective outer end and an inner end of the chamber body and the valve stem to seal the annular metering chamber there between, wherein the inner seal comprises a wiper element, the method comprising: injecting under pressure a product into the valve stem to cause said wiper element to deflect to permit flow of said product from said valve stem, through said metering chamber and into said dispensing container.

Preferred embodiments of the present invention will now be described, by way of example only, with reference to the accompanying drawings in which:-
Figure 1 shows a cross-sectional view of a first embodiment of dispensing apparatus according to the present invention in an actuated position;
Figure 2 shows a cross-sectional enlarged view of a part of the dispensing apparatus of Figure 1 in a non-actuated position;
Figure 3 shows a cross-sectional view of a second embodiment of dispensing apparatus according to the present invention in a non-actuated position; and
Figure 4 shows a cross-sectional enlarged view of a part of the dispensing apparatus of Figure 2 in a non-actuated position.

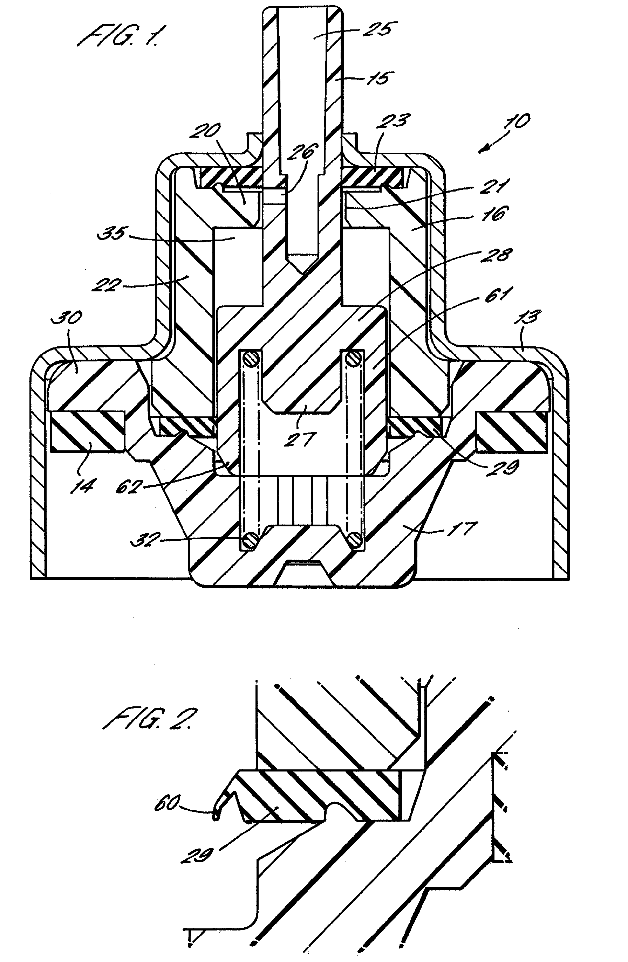

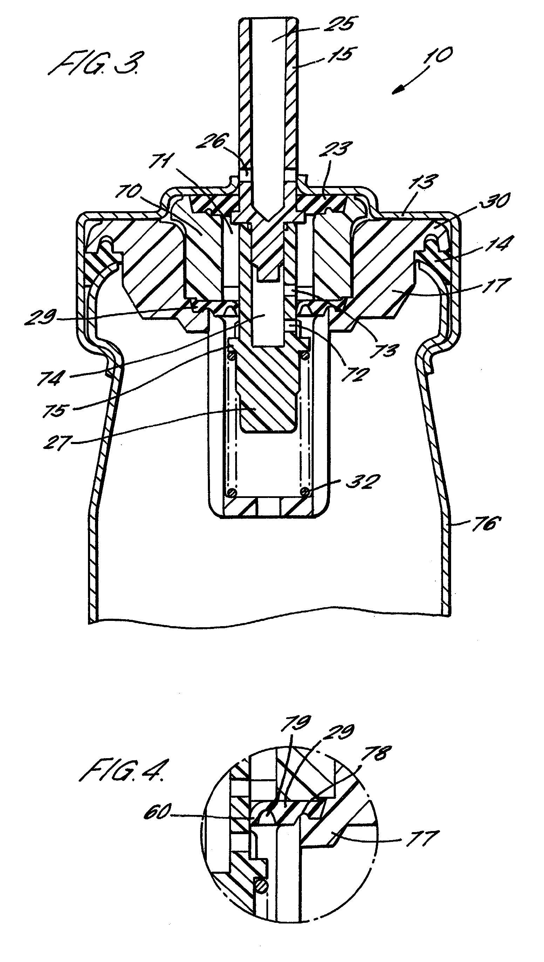

A first embodiment of dispensing apparatus 10 according to the present invention is shown in Figures 1 and 2. The dispensing apparatus comprises a metering valve 10 which is attached in use to a pressurised dispensing container (not shown) in which a product to be dispensed in metered doses is stored. The product may be a liquid or a medicament normally in suspension or other excipients or a product which is expelled using a liquified propellant such as a CFC or HFA or blends thereof.

The metering valve 10 is held in position to seal the dispensing container by a ferrule 13 which is crimped to the open neck of the container. An elastomeric sealing gasket 14 prevents leakage of the product between the ferrule 13 and container.

The metering valve comprises a valve stem 15 which extends co-axially within a generally cup-shaped chamber body 16 so as to be externally accessible. The metering valve further comprises a valve body 17 which supports the chamber body 16 within the metering valve 10.

The chamber body 16, which is made preferably of a polymeric material, has a base 20 in which is located an aperture 21 and side walls 22 defining the open end of the chamber body 16. Sandwiched between the base 20 of the chamber body 16 and the ferrule 13 is an elastomeric sliding seal 23 which also has an aperture therein.

The valve stem 15, which is also preferably made of a polymeric or metallic material, has at one end a generally hollow section 25 defining a dispensing channel in which portion 25 is located a port 26, and at its other end a solid section 27 which extends within and slidably relative thereto the chamber body 16. A flange 28 is provided on the solid section 27 within the confines of the chamber body 16. The side walls 22 of the chamber body 16 are preferably cylindrical.

The valve stem 15 comprises a dependent cylindrical portion 61 which is spaced radially from the solid section 27. The external diameter of the cylindrical portion 61 is selected to be smaller than the internal diameter of the chamber body 16 thus leaving a radial clearance there between of, typically, between 0.3 mm and 0.8 mm. The cylindrical portion 61 is rigid and preferably moulded as part of the valve stem 15. A distal end 62 of the cylindrical portion 61 is tapered.

The valve body 17 covers off the open end of the chamber body 16 and is secured in position by a flange portion 30 clamped between the ferrule 13 and the sealing gasket 14. The valve body 17 has entry ports 31 to allow the liquified product to access the inside of the metering valve 10.

A return spring 32, preferably of stainless steel is located between a base of the valve body 17 and the flange 28 thereby urging the valve stem 15 into contact with the base 20 of the chamber body 16. As shown in Figure 1, preferably, the diameter of the return spring 32 is chosen so as to be a close fit over the solid section 27 of the valve stem 15 so as to provide lateral support to the valve stem 15 during movement thereof to prevent undue lateral deflection of the valve stem 15 under side loading.

An inner seal 29 is clamped between the chamber body 16 and valve body 17 to prevent fluid passage through the interface. According to the present invention, the inner seal 29 extends radially inwardly into the void space within the chamber body 16 - valve body 17 sub-assembly. A wiper element 60 is provided at the inner, distal edge of the inner seal 29. The wiper element 60 is inwardly directed such that the wiper is directed towards the valve body 17 and away from the chamber body 16.

Preferably, the inner seal 29 is formed as a co-moulding with the valve body 17 to ensure that the inner seal 29 is properly aligned with the axial movement of the valve stem 15.

In use, the valve stem 15 is displaced axially relative to the remainder of the metering valve against the bias of the return spring 32. As this occurs, a temporary chamber 35 (shown in Figure 1 which shows the valve in an actuated position) is created between the valve stem 15 and the chamber body 16. The product is drawn in through the clearance between the cylindrical portion 61 and the chamber body 16 and flows into the chamber 35. Movement of the valve stem 15 then brings the tapered end 62 of the cylindrical portion 61 into contact with the inner seal 29. A liquid-tight seal is therefore created at the circumferential ring of contact between the external surface of the cylindrical portion 61 and the inner seal 29 which prevents passage of product outwards towards the chamber 35. At this point, the metered dose of the product to be dispensed is defined by the volume of the chamber 35 and the clearance between the cylindrical portion 61 and chamber body 16 on the outlet side of the point of contact between the cylindrical portion 61 and chamber body 16. Advantageously according to the present invention, the cylindrical portion 61 contacts the wiper element 60 of the inner seal 29. Movement of the valve stem 15 and cylindrical portion 61 deflects rather than distorts the wiper element 60 during operation. In this way an effective seal is produced without damaging the inner seal 29. The geometry of the inner seal 29 does not require as much axial deflection when compared to traditional sliding seals since the majority of the movement is accommodated by deflection of the wiper element 60. Therefore the structure of the valve body 17 immediately underneath the inner seal 29 may be enlarged to provide a greater degree of support thereby reducing excessive axial deflection of the seal 29 during operation. This effect is known as 'seat drag' and, where it occurs, can lead to inconsistency in the shot weight delivered by the valve during its working life. In addition, the force required to actuate the valve is less since the magnitude of the friction between the wiper 60 and the valve stem 15 is less than with a traditional seal. In the sealed position, the pressure of the contents of the dispensing container acts on the back of the wiper element 60 tending to increase the sealing efficiency of the wiper element 60 against the cylindrical portion 61. Further depression of the valve stem 15 causes the port 26 in the hollow section 25 of the valve stem 15 to pass through the sliding seal 23 and into the chamber 35 as shown in Figure 1. The propellant systems used in the dispensing apparatus are liquified gases or combinations thereof having boiling temperatures significantly below room temperature. As a result, the product boils off evacuating the contents of the chamber 35 through the port 26 into the dispensing channel in the hollow section 25 of the valve stem 15 thus providing an exit path for the product.

At its maximum point of travel, the distal end of the solid section 27 of the valve stem 15 comes into contact with an abutment surface of the valve body 17 limiting the axial movement of the valve stem 15.

Release of the valve stem 15 allows the spring 32 to recover thereby forcing the valve stem 15 to return to its rest position and chamber 35 to be removed as the solid section 27 and cylindrical portion 61 approach the base 20. Any product left in the chamber 35 is forced to return to the dispensing container via the clearance thereby preventing sedimentation.

Advantageously, the metering valve of the present invention may be easily and rapidly filled by a pressure-filling technique. A further advantage of the inward pointing geometry of the wiper element 60 is that pressure filling through the metering valve is made easier since the wiper element 60 is more readily deflected away, and out of contact, from the cylindrical portion 61 during the pressure filling procedure. During pressure filling, product is forced, under pressure, through the valve stem 15 from the hollow end 25 with the valve stem in the depressed, 'firing' position. The product passes through the valve stem, chamber 35 and inlets of the valve body 17 into the dispensing container. Normally the pressure used must be great enough to overcome the internal seal between the valve stem and the chamber body or valve body. However, in the present invention the pressure may easily 'blow past' the inner seal 29 by distorting the wiper 60 downwardly. Consequently, pressure filling is quicker and more consistent since the flow resistance is less. Conversely, in normal operation of the metering valve, the positioning of the chamber body inlets means that the internal pressure of the dispensing container is acting on the inside of the wiper 60 in the 'firing' position forcing the wiper 60 against the cylindrical portion 61, thus improving the integrity of the seal.

In the first embodiment the invention has been described incorporated into a valve having a temporary metering chamber 35 that is created and filled during actuation. However, the invention also finds application in other types of valves where a permanent metering chamber is present as shown in the second embodiment illustrated in Figures 3 and 4. Like components to those described above with reference to the first embodiment have been referenced with like numerals.

The metering valve 10 of the second embodiment comprises a permanent metering chamber 71 defined by a chamber body 70 held securely in place between the valve body 17 and the ferrule 13. The valve stem 15 is slidably movable within the chamber body 70 between a non-actuated position (shown in Figure 3) and an actuated position. The valve stem 15 comprises, as above, an outlet port 26 through which product is dispensed from the metering chamber 71 in the actuated position. The valve stem 15 also comprises a transfer channel 74 communicating with the metering chamber 71 by means of a transfer port 73 and with the bulk product in the dispensing container 76 by means of an inlet port 72. The valve stem 15 is biassed into the non-actuated position by means of a spring 32 spanning between the valve body 17 and a flange 75 on the valve stem 15. In the non-actuated position the metering chamber 71 is in communication with the dispensing container 76 via the transfer port 73, transfer channel 74 and inlet port 72. In the actuated position the metering chamber 71 is in communication with the hollow part 25 of the valve stem 15 via the outlet port 26. According to the present invention the inner seal 29 again comprises a wiper element 60 although in the second embodiment the wiper element 60 extends inwardly into contact with the valve stem 15. As shown most clearly in Figure 4 the valve body 17 in the region 77 immediately underneath the inner seal 29 is extended inwardly to provide axial support to the body portion 79 of the inner seal 29. Preferably, the portion 77 beneath the inner seal is extended or otherwise shaped such that only the wiper element 60 of the inner seal 29 protrudes inwardly and is unsupported. This is advantageous as discussed above in relation to the first embodiment in reducing 'seat drag'. Preferably, the seal 29 and portion 7 are keyed into one another by means of a ridge 78, rib or similar feature. Optionally, the seal 29 and valve body 17 may be formed as a co-moulding.

## Claims

1. A metering valve comprising a valve stem co-axially slidable within a chamber body, said chamber body and said valve stem defining a metering chamber, an outer and an inner annular seal being provided operative between a respective outer end and an inner end of the chamber body and the valve stem to seal the annular metering chamber there between, wherein the inner seal comprises a wiper element.

2. A metering valve as claimed in claim 1 wherein the wiper element is directed away from the outer seal.

3. A metering valve as claimed in claim 1 or claim 2 wherein the inner seal is formed from a thermoplastic elastomer.

4. A metering valve as claimed in any of claims 1 to 3 further comprising a valve body, wherein the inner seal is located between the valve body and the chamber body.

5. A metering valve as claimed in claim 4 wherein the inner seal is formed as a co-moulding with the valve body.

6. A metering valve as claimed in claim 4 or claim 5 wherein the wiper element comprises a wiper portion and a body portion, wherein an undersurface of the body portion is fully supported by the valve body.

7. A dispensing apparatus comprising a metering valve as claimed in any preceding claim.

8. A metering valve comprising a valve stem having at one end a piston extending within and slidable relative to a cup shaped chamber body, a clearance being provided between an outer surface of the piston and an inner surface of the chamber body to provide a path for product, a spring urging the piston against a base of the chamber body, movement of the valve stem against the spring bias causing the piston to move away from the base of the chamber body to define a temporary metering chamber between the valve stem and chamber body, the metering valve further comprising sealing means provided such that as an end of the piston moves into contact with the sealing means the flow of product along the path is prevented and the product dispensed through an outlet in the valve stem, wherein the sealing means comprises a wiper element.

9. A metering valve as claimed in claim 8 wherein the wiper element is directed away from the base of the chamber body.

10. A metering valve as claimed in claim 8 or claim 9 wherein the sealing means is formed from a thermoplastic elastomer.

11. A metering valve as claimed in any of claims 8 to 10 further comprising a valve body, wherein the sealing means is located between the valve body and the chamber body.

12. A metering valve as claimed in claim 11 wherein the sealing means is formed as a co-moulding with the valve body.

13. A metering valve as claimed in claim 11 or claim 12 wherein the wiper element comprises a wiper portion and a body portion, wherein an undersurface of the body portion is fully supported by the valve body.

14. A dispensing apparatus comprising a metering valve as claimed in any of claims 8 to 13.

15. A method of pressure filling a dispensing apparatus of the type comprising a metering valve closing off a dispensing container, the metering valve comprising a valve stem co-axially slidable within a chamber body, said chamber body and said valve stem defining a metering chamber, an outer and an inner annular seal being provided operative between a respective outer end and an inner end of the chamber body and the valve stem to seal the annular metering chamber there between, wherein the inner seal comprises a wiper element, the method comprising: injecting under pressure a product into the valve stem to cause said wiper element to deflect to permit flow of said product from said valve stem, through said metering chamber and into said dispensing container.
